# EUROPEAN PATENT SPECIFICATION

(11) **EP 2 966 743 B1**
(45) Date of publication and mention of the grant of the patent: **30.05.2018**
(21) Application number: 13877393.2
(22) Date of filing: 07.03.2013
(51) Int. Cl.: H02H 3/08, H02J 9/06, G06F 1/24, G06F 1/30, A24F 47/00

(54) **PROTECTION DEVICE AND METHOD FOR PREVENTING POWER SOURCE VOLTAGE OF MICROCONTROLLER FROM DROPPING IN ELECTRONIC CIGARETTE**
SCHUTZVORRICHTUNG UND VERFAHREN ZUR VERHINDERUNG DES SINKENS DER STROMVERSORGUNGSSPANNUNG EINES MIKROCONTROLLERS IN EINER ELEKTRONISCHEN ZIGARETTE
DISPOSITIF ET PROCÉDÉ DE PROTECTION POUR ÉVITER UNE CHUTE DE TENSION DE SOURCE D'ALIMENTATION DE MICROCONTRÔLEUR DANS UNE CIGARETTE ÉLECTRONIQUE

(30) Priority: 05.03.2013 CN 201310069936
(43) Date of publication of application: 13.01.2016
(73) Proprietor: Huizhou Kimree Technology Co., Ltd. Shenzhen Branch, Shenzhen, 518040 (CN)
(72) Inventor:
(74) Representative: Reichold, Rudolf
(86) International application number: PCT/CN2013/072307
(87) International publication number: WO 2014/134812

(56) References cited:
- EP-A2- 2 306 266
- CN-A- 102 280 924
- CN-U- 201 667 547
- CN-U- 203 166 462
- JP-A- H07 234 746
- US-A- 5 249 227
- US-A1- 2005 040 792
- US-A1- 2005 040 792

## Description

### FIELD OF THE INVENTION

The present invention relates to the field of electronic cigarette and electronic cigarette case technology, more particularly, relates to an electronic cigarette and electronic cigarette case with a microcontroller, and a protection device and method for preventing supply voltage of microcontroller from dropping.

### BACKGROUND OF THE INVENTION

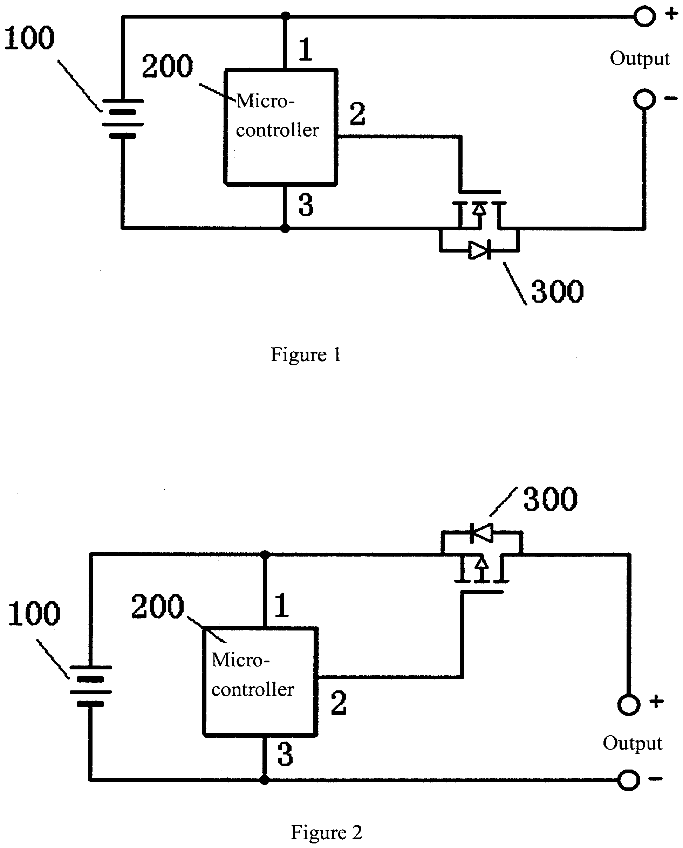

In most of the current electronic cigarette and electronic cigarette case, a microcontroller is directly supplied electric power by a battery, the microcontroller powers on or off a load via controlling a switch field effect transistor (hereinafter, referred to as "MOSFET"). As shown in Figures 1 and 2, a circuit of the electronic cigarette contains a battery 100, a microcontroller 200 and a field effect transistor 300. The battery 100 is used to supply electric power to both the microcontroller 200 and the load, and the microcontroller 200 is used to output a control signal to turn on or off the field effect transistor 300 for controlling the heating element of the electronic cigarette and electronic cigarette case. There are some risks to the power supply structure of Figures 1 and 2, such as, when the MOSFET is turned on and if the load circuit is in short circuit or over current condition, an output voltage of the battery applied as a supply voltage of the microcontroller drops rapidly. When the supply voltage of the microcontroller drops below the minimal operating voltage of the microcontroller, the microcontroller may be in an uncontrollable or unstable state. The internal components and wires of the electronic cigarette may be damaged by excess current caused by the over current or short circuit.

The uncontrollable state of the microcontroller may lead to other unexpected damage, so it is necessary to develop a circuit to delay the supply voltage of the microcontroller dropping.

Therefore, the existing technology has flaws, and needs to be improved. US20050040792 discloses related prior art.

### SUMMARY OF THE INVENTION

The invention is as set out in the independent claims.

Aiming at the drawbacks existing in the prior art that the microcontroller may be in an uncontrollable or unstable state when short circuit or over current happens, the technical problem to be solved in the present invention is to provide a protection device or method which involves an energy storage circuit inside the electronic cigarette to delay the supply voltage dropping, thus achieving the purpose of circuit protection.

The technical solutions of the present invention for solving the technical problem are as follows:
A protection device for preventing a supply voltage of a microcontroller from dropping in an electronic cigarette is provided, which comprises a microcontroller, a power supply module, a field effect transistor, and an energy storage circuit; the power supply module is used to output a supply voltage to both the microcontroller and a load, the energy storage circuit is connected between the microcontroller and the power supply module; when an over current or short circuit occurs in the load, the energy storage circuit supplies a backup electric power to the microcontroller, which delays the supply voltage of the microcontroller dropping in a certain period of time; the microcontroller is configured to process the over current or short circuit signal during the period of time, and output a control signal to turn off the field effect transistor.

Advantageously, the energy storage circuit comprises a diode and an energy storage capacitor, the positive electrode of the diode is connected to the positive electrode of the power supply module, the negative electrode of the diode is connected to the positive supply terminal of the microcontroller and a first terminal of the capacitor, and a second terminal of the capacitor is connected to the negative electrode of the power supply module and the negative supply terminal of the microcontroller; when an output voltage of the power supply module drops, which is caused by the over current or short circuit, the capacitor of the energy storage circuit begins to supply electric power to the microcontroller by discharging and a discharging path from the capacitor to the power supply module is cut off by the diode.

Advantageously, the energy storage circuit comprises a diode and an energy storage capacitor, a first terminal of the capacitor is connected to the positive electrode of a power supply module and the positive supply terminal of the microcontroller, a second terminal of the capacitor is connected to the positive electrode of the diode and the negative supply terminal of the microcontroller, and the negative electrode of the diode is connected to the negative electrode of the power supply module; when an output voltage of the power supply module drops, which is caused by over current or short circuit, the capacitor of the energy storage circuit begins to supply electric power to the microcontroller and prevents a supply voltage of the microcontroller from dropping rapidly, and a discharging path form the capacitor to the power module is cut off by the diode.

Advantageously, the protection device further comprises an over current or short circuit detection module, the over current or short circuit detection module is used for real-time detection of the operating current of the load and transmits a detected signal to the microcontroller.

Advantageously, a signal output terminal of the microcontroller is connected to the gate of the field effect transistor, the source of the field effect transistor is connected to the negative electrode of the power supply module, and the drain of the field effect transistor is connected to the load.

Advantageously, the signal output terminal of the microcontroller is connected to the gate of the field effect transistor, the source of the field effect transistor is connected to the external load, and the drain of the field effect transistor is connected to the positive electrode of the power supply module and the positive electrode of the diode.

Advantageously, the signal output terminal of the microcontroller is connected to the gate of the field effect transistor, the source of the field effect transistor is connected to the negative electrode of the power supply module and the negative electrode of the diode, and the drain of the field effect transistor is connected to the load.

Advantageously, the signal output terminal of the microcontroller is connected to the gate of the field effect transistor, the drain of the field effect transistor is connected to the positive electrode of the power supply module, a first terminal of the capacitor and the positive supply terminal of the microcontroller, and the source of the field effect transistor is connected to the load.

Advantageously, the microcontroller is configured as Single Chip Microcomputer or CPU.

A method for preventing a supply voltage of a microcontroller from dropping in an electronic cigarette is further provided, the method comprises:
an energy storage circuit connected between a microcontroller and a power module, delaying a supply voltage of the microcontroller dropping when an over current or short circuit occurs, and maintaining the supply voltage of the microcontroller being not less than its minimal operating voltage in a certain period of time; and
the microcontroller processing the over current or short circuit signal in the certain period of time and outputting a control signal to turn off the field effect transistor to cut off the over current flow.

Advantageously, the energy storage circuit comprises a diode and an energy storage capacitor; the positive electrode of the diode is connected to the positive electrode of the power supply module, the negative electrode of the diode is connected to a first terminal of the capacitor and the positive supply terminal of the microcontroller, and a second terminal of the capacitor is connected to the negative supply terminal of the microcontroller and the negative electrode of the power supply module; and the certain period of time is a discharge time of the capacitor.

Advantageously, the energy storage circuit comprises a diode and an energy storage capacitor; a first terminal of the capacitor is connected to the positive electrode of the power supply module and the positive supply terminal of the microcontroller, a second terminal of the capacitor is connected to the positive electrode of the diode and the negative supply terminal of the microcontroller, and the negative electrode of the diode is connected to the negative electrode of the power supply module; and the certain period of time is the discharge time of the capacitor.

Advantageously, the discharge time is the time when the voltage of the energy storage capacitor voltage drops from normal operating voltage to minimal operating voltage of the microcontroller by discharging to supply electric power to microcontroller.

The present invention discloses a protection device and method for preventing a supply voltage of a microcontroller from dropping in an electronic cigarette. The following advantageous effects can be achieved: an energy storage circuit is connected between a microcontroller and a power supply module, the energy storage circuit begins to supply electric power to the microcontroller when the over current or short circuit occurs, and maintains a supply voltage of the microcontroller being not less than its minimal operating voltage in a certain period of time, then the microcontroller turns off the MOSFET according to the over current or short circuit signal transmitted, therefore the output current flow is cut off, and the electronic cigarette circuit is protected. The circuit of the present invention is simple and low cost, and resolves the problem that the microcontroller becomes unstable or uncontrollable when over current or short circuit happens in the prior art.

### BRIEF DESCRIPTION OF THE DRAWINGS

The present invention will be further described with reference to the accompanying drawings and embodiments in the following, in the accompanying drawings:
Figure 1 is a schematic diagram of a supply circuit of a microcontroller in an electronic cigarette according to a first embodiment of the prior art;
Figure 2 is a schematic diagram of a supply circuit of a microcontroller in an electronic cigarette according to a second embodiment of the prior art;
Figure 3 is a block diagram of a protection device for preventing a supply voltage of a microcontroller from dropping according to the present invention;
Figure 4 is a circuit schematic diagram of a protection device for preventing a supply voltage of a microcontroller from dropping according to a first embodiment of the present invention;
Figure 5 is a circuit schematic diagram of a protection device for preventing a supply voltage of a microcontroller from dropping according to a second embodiment of the present invention;
Figure 6 is a circuit schematic diagram of a protection device for preventing a supply voltage of a microcontroller from dropping according to a third embodiment of the present invention;
Figure 7 is a circuit schematic diagram of a protection device for preventing a supply voltage of a microcontroller from dropping according to a fourth embodiment of the present invention.

### DETAILED DESCRIPTION OF THE PREFERRED EMBODIMENT

To solve the drawbacks that a microcontroller in an electronic cigarette becomes uncontrollable or unstable in an over current or circuit short condition, which results in damage to internal components and wires circuit of the electronic cigarette, a protection device and method for delaying a supply voltage of a microcontroller dropping is provided. The core ideas are as follows: an energy storage circuit is connected between the microcontroller and a power supply module; when the over current or short circuit happens in a load circuit in the electronic cigarette, the energy storage circuit supplies a supply voltage to the microcontroller in a certain period of time. The supply voltage is in the range of normal operating voltage of the microcontroller to minimal operating voltage of the microcontroller, which avoids the circumstances happening that the supply voltage of the microcontroller drops rapidly and hence the microcontroller does not work normally. The microcontroller processes during the certain period of time the over current or short circuit signal received and outputs a control signal to turn off the field effect transistor to power off the load, and realizes the protection to the electronic cigarette in the over current or short circuit circumstance. Accordingly, the problem that the microcontroller is unstable or uncontrollable in the over current or short circumstance in the prior art is solved.

To make the technical solution, objective and effect of the present invention be understood more clearly, now the specific implementation of the present invention is described in detail with reference to the accompanying drawings and embodiments. While the specific embodiments of the present invention have been described here, it should be understand that they are presented to explain the present invention, but not to limit the present invention.

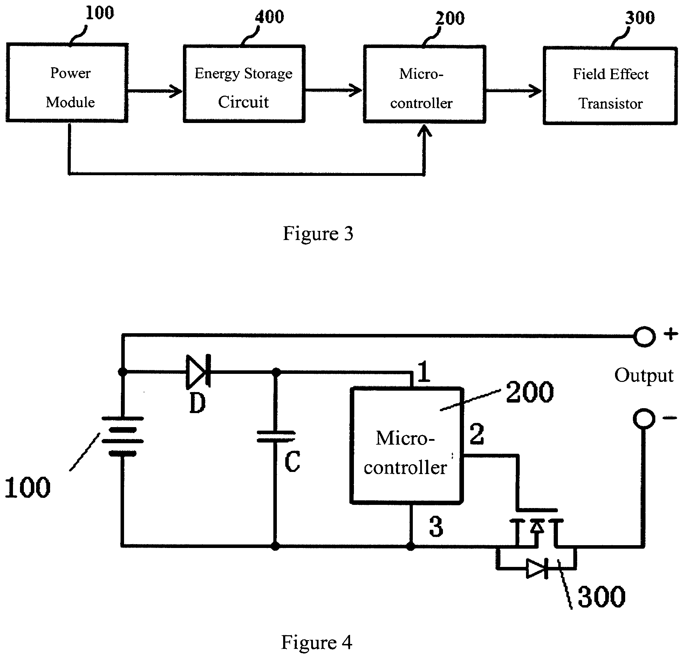

Figure 3 is a block diagram for a protection device for preventing a supply voltage of microcontroller from dropping in the present invention. The protection device comprises a power supply module 100, a microcontroller 200, a field effect transistor 300, an energy storage circuit 400 and an over current or short circuit detection module. The over current or short circuit detection module is used for real-time detection of the operating current of the circuit, and provides the microcontroller with the detected signal (no shown in the Figure). The energy storage circuit 400 is provided between the power module 100 and the microcontroller 200. The power module 100 is connected to the microcontroller 200, and the power module 100 is used to supply electric power to both the microcontroller 200 and a load. The energy storage circuit 400 is used to supply electric power to the microcontroller 200 to maintain a supply voltage of the microcontroller 200 being not less than its minimal operating voltage in a certain period of time when the supply voltage of microcontroller 200 drops. The microcontroller 200 is connected to the field effect transistor 300 and the over current or short circuit detection module. The microcontroller 200 is used to detect and determine the occurrence of over current or short circuit, and process the over current or short circuit signal, then output a control signal to turn off the field effect transistor 300, thus achieving the purpose of circuit protection.

The microcontroller 200 of the present invention may be Single Chip Microcomputer, CPU or logic control device. The microcontroller 200 comprises three pins, a first pin is the positive supply terminal of microcontroller 200, a third pin is the negative supply terminal of microcontroller 200, and a second pin is a signal output terminal. The power supply module 100 is a rechargeable battery. The type of the field effect transistor 300 is preferably AO3400 or DTS2300; however, it is not limited to the above selected type.

The energy storage circuit 400 of the present invention comprises a diode D and an energy storage capacitor C. In the first specific embodiment of the present invention (see Figure 4), the positive electrode of the diode D is connected to the positive electrode of the battery 100, the negative electrode of the diode D is connected to the first pin (the positive supply terminal) of the microcontroller 200 and a first terminal of the energy storage capacitor C, and a second terminal of the storage capacitor C is connected to the negative electrode of the battery 100 and the third pin of the microcontroller 100. When an output voltage of battery 100 drops caused by the over current or short circuit, the energy storage capacitor C of the energy storage circuit 400 is used to supply electric power to the microcontroller 200 by discharging. A discharging path from the energy storage capacitor C to the battery 100 is cut off by the diode D. The second pin of the microcontroller 200 is connected to the gate of the field effect transistor 300, the source of the field effect transistor 300 is connected to the negative electrode of the battery 100, and the drain of the field effect transistor 300 is connected to the load.

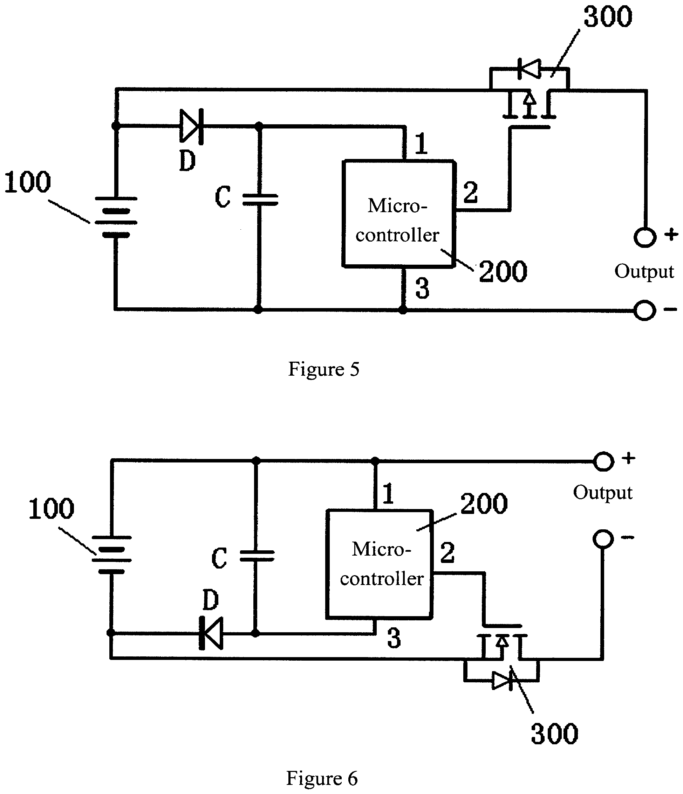

In the second specific embodiment of the present invention (see Figure 5), the positive electrode of the diode D is connected to the positive electrode of the battery 100, the negative electrode of the diode D is connected to the first pin (the positive supply terminal) of the microcontroller 200 and a first terminal of the storage capacitor C, and a second terminal of the storage capacitor C is connected to the negative electrode of the battery 100 and the third pin of the microcontroller 200. When an output voltage of the battery 100 drops caused by the over current or short circuit, the energy storage capacitor C of the energy storage circuit 400 supplies electric power for the microcontroller 200 by discharging, and a discharging path from energy storage capacitor C to the battery 100 is cut off by the diode D. The second pin of the microcontroller 200 is connected to the gate of the field effect transistor 300, the source of the field effect transistor 300 is connected to the load, and the drain of the field effect transistor 300 is connected to the positive electrode of the battery 100 and the positive electrode of the diode D. In the first and second embodiments, the connection forms of the energy storage circuit 400 connected between the battery 100 and the microcontroller 200 in the circuit are the same. The difference between the first and the second embodiments is the connection form of the field effect transistor 300, as shown in Figures 4 and 5.

In the third specific embodiment of the present invention (see Figure 6), a first terminal of the energy storage capacitor C of the energy storage circuit 400 is connected to the positive electrode of the battery 100 and the positive supply terminal (the first pin) of the microcontroller 200, a second terminal of the storage capacitor C is connected to the positive electrode of the diode D and the negative supply terminal (the third pin) of the microcontroller 200, and the negative electrode of the diode D is connected to the negative electrode of the battery 100. When an output voltage of the battery 100 drops caused by the over current or short circuit, the energy storage capacitor C of the energy storage circuit 400 supplies electric power to the microcontroller 200 and delays the supply voltage of the microcontroller 200 dropping rapidly, and a discharging path from energy storage capacitor C to the battery 100 is cut off by the diode D. The signal output terminal (the second pin) of the microcontroller 200 in the embodiment is connected to the gate of the field effect transistor 300, the source of the field effect transistor 300 is connected the negative electrode of the battery 100 and the negative electrode of the diode D, the drain of the field effect transistor 300 is connected to the load.

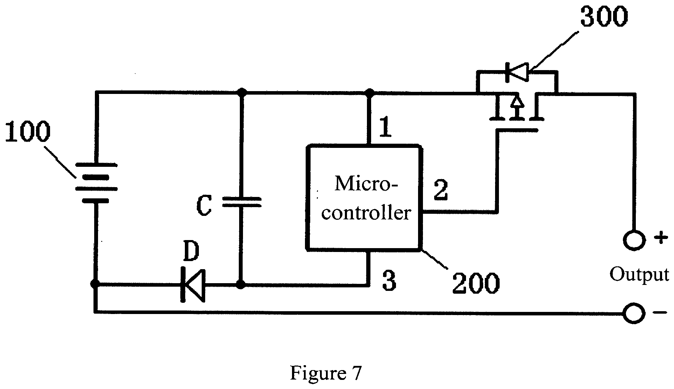

In the fourth specific embodiment (see Figure 7), a first terminal of the energy storage capacitor C of the energy storage circuit 400 is connected to the positive electrode of the battery 100 and the positive supply terminal (the first pin) of the microcontroller 200, a second terminal of the energy storage capacitor C is connected to the positive electrode of the diode D and the negative supply terminal (the third pin) of the microcontroller 200, and the negative electrode of the diode D is connected to the negative electrode of the battery 100. When an output voltage of the battery 100 drops caused by the over current or short circuit, the energy storage capacitor C of the energy storage circuit 400 supplies electric power to the microcontroller 200 and delays the supply voltage of the microcontroller 200 dropping rapidly, and a discharging path from the storage capacitor C to the battery 100 is cut off by the diode D. The signal output terminal (the second pin) of the microcontroller 200 in the embodiment is connected to the gate of the field effect transistor 300, the drain of the field effect transistor 300 is connected to the positive electrode of the battery 100, a terminal of the energy storage capacitor C and the positive supply terminal (the first pin) of the microcontroller 200, the source of the field effect transistor 300 is connected to the load. In the third and fourth embodiments, the connection forms of the energy storage circuit 400 connected between the battery 100 and the microcontroller 200 in the circuits are the same. The difference between the third and fourth embodiments is the connection form of the field effect transistor 300, as shown in Figures 6 and 7.
when an output voltage of the power module drops caused by the over current or short circuit, by exploiting the characteristic that the voltage of capacitor cannot change suddenly, the energy storage capacitor C of the energy storage circuit supplies electric power to the microcontroller, and by exploiting unipolar conductivity of diode, discharging paths from the energy storage capacitor C to the battery and to the load respectively are all cut off by the diode D.

The method for preventing a supply voltage of a microcontroller from dropping in the present invention comprises the following steps:
S1, real-time detection of an operating current of a load circuit, and providing the microcontroller with a detected signal, when an over current or short circuit is detected, at the same time an output supply voltage of a battery drops;
S2, an energy storage circuit coupled between the microcontroller and the battery begins to supply electric power to the microcontroller and prevents the supply voltage of the microcontroller from dropping, and maintains the supply voltage of the microcontroller being not less than its minimal operating voltage in a certain period of time;
S3, the microcontroller processes the over current or short circuit signal in the certain period of time and outputs a control signal to turn off the field effect transistor to cut off the current follow.

As shown in Figures 4 and 5, a certain period of time for the microcontroller is the discharge time of the energy storage capacitor C. As shown in Figures 6 and 7, a certain period of time for the microcontroller is the discharge time of the energy storage capacitor C, the discharging time is the time when the voltage of the energy storage capacitor voltage drops from normal operating voltage of the microcontroller to minimal operating voltage of the microcontroller by discharging to supply electric power to the microcontroller (in the present invention, the discharging time may be 1-100ms, preferable 2-5ms). When an output voltage of the power module drops caused by the over current or short circuit, by exploiting the characteristic that the voltage of capacitor cannot change suddenly, the energy storage capacitor C of the energy storage circuit supplies electric power to the microcontroller, and by exploiting unipolar conductivity of diode, discharging paths from the energy storage capacitor C to the battery and to the load respectively are all cut off by the diode D.

In conclusion, since an energy storage circuit is connected between the microcontroller and the battery, the energy storage circuit supplies electric power to the microcontroller to delay a supply voltage of the microcontroller dropping when an over current or short circuit occurs, and maintains the supply voltage of the microcontroller being not less than its minimal operating voltage in a certain period of time; the microcontroller processes the over current or short circuit signal in the certain period of time, and outputs a control signal to turn off the field effect transistor for cutting off the current flow. The unstable or uncontrollable problem of the microcontroller in the prior art is resolved, so effective protection to the electronic cigarette in over current or short circuit circumstance is realized.

Therefore, the present invention is not limited to the disclosed specific embodiments, but should comprise all embodiments that fall within the range of the claims.

## Claims

1. A protection device for preventing a supply voltage of a microcontroller (200) from dropping in an electronic cigarette, comprising;
a microcontroller (200);
a power supply module (100) used to output a supply voltage to the microcontroller (200) and a load;
a field effect transistor (330), the source of the field effect transistor being connected to the negative electrode of the power supply module, and the drain of the field effect transistor being connected to the load; an over current or short circuit detection module, used to real-time detect an operating current of a load circuit, and to provide the microcontroller (200) with detection signal; and
an energy storage circuit (400) connected between the microcontroller (200) and the power supply module (100), and the energy storage circuit (400) is used to supply electric power to the microcontroller (200) and to delay the supply voltage of the microcontroller (200) from dropping in a certain period of time when an over current or short circuit occurs in the load; and the microcontroller (200) is used to process the over current or short circuit signal in the certain period of time and output a control signal to turn off the field effect transistor (300);
**characterized in that** the energy storage circuit (400) comprises a diode (D) and an energy storage capacitor (C), the positive electrode of the diode (D) is connected to the positive electrode of the power supply module (100), the negative electrode of the diode (D) is connected to the positive supply terminal of the microcontroller (200) and a first terminal of the storage capacitor, a second terminal of the energy storage capacitor (C) is connected to the negative electrode of the power supply module (100) and the negative supply terminal of the microcontroller (200); and
when an output voltage of the power module drops caused by the over current or short circuit, the energy storage capacitor (C) of the energy storage circuit (400) supplies electric power to the microcontroller (200), and a discharging path from the energy storage capacitor (C) following via the power module is cut off by the diode (D).

2. The protection device for preventing the supply voltage of the microcontroller (200) from dropping according to claim 1, **characterized in that** a signal output terminal of the microcontroller (200) is connected to the gate of the field effect transistor (300), the source of the field effect transistor (300) is connected to the negative electrode of the power module, the drain of the field effect transistor (300) is connected to the load.

3. The protection device for preventing the supply voltage of the microcontroller (200) from dropping according to claim 1, **characterized in that** a signal output terminal of the microcontroller (200) is connected to the gate of the field effect transistor (300), the source of the field effect transistor (300) is connected to the load, the drain of the field effect transistor (300) is connected to the positive electrode of the power supply module (100) and the positive electrode of the diode (D).

4. The protection device for preventing the supply voltage of the microcontroller (200) from dropping according to any one of claims 1-3, **characterized in that** the microcontroller (200) is configured as Single Chip Microcomputer or CPU.

5. A method for preventing a supply voltage of a microcontroller (200) from dropping in an electrode cigarette, **characterized in that** the method comprising:
real-time detecting an operating current of a load circuit, and providing the microcontroller (200) with a detection signal, when an over current or short circuit is detected, at the same time an output supply voltage of a battery drops;
an energy storage circuit (400) connected between the microcontroller (200) and a power module, delaying the supply voltage of the microcontroller (200) dropping when an over current or short circuit occurs, and maintaining the supply voltage of the microcontroller (200) being not less than its minimal operating voltage in a certain period of time; and
the microcontroller (200) processing the over current or short circuit signal in the certain period of time and outputting control signal to turn off a field effect transistor (300) for cutting off current flow in the load circuit, the source of the field effect transistor being connected to the negative electrode of the battery, and the drain of the field effect transistor is connected to the load circuit; the energy storage circuit (400) comprises a diode (D) and an energy storage capacitor (C), the positive electrode of the diode (D) is connected to the power supply module (100), the negative electrode of the diode (D) is connected to a first terminal of the storage capacitor and the microcontroller (200), a second terminal of the storage capacitor is connected to the negative supply terminal of the microcontroller (200) and the negative electrode of the power supply module (100); and
the certain period of time is a discharge time of the energy storage capacitor (C).

6. The method for preventing the supply voltage of the microcontroller (200) from dropping according to claim 5, **characterized in that** the discharge time is the time when the voltage of the energy capacitor voltage drops from normal operating voltage of the microcontroller (200) to minimal operating voltage of the microcontroller (200) by discharging to supply electric power to the microcontroller (200).

## Patentansprüche

1. Schutzvorrichtung zum Verhindern, dass eine Versorgungsspannung eines Mikrocontrollers (200) in einer elektronischen Zigarette abfällt, mit:
einem Mikrocontroller (200);
einem Leistungsversorgungsmodul (100), das dazu verwendet wird, eine Versorgungsspannung an den Mikrocontroller (200) auszugeben, und einer Last;
einem Feldeffekttransistor (330), wobei die Source des Feldeffekttransistors mit der negativen Elektrode des Leistungsversorgungsmoduls verbunden ist und der Drain des Feldeffekttransistors mit der Last verbunden ist;
einem Überstrom- oder Kurzschluss-Detektionsmodul, das dazu verwendet wird, einen Betriebsstrom einer Lastschaltung in Echtzeit zu ermitteln und ein Detektionssignal an den Mikrocontroller (200) zu liefern; und
einer Energiespeicherschaltung (400), die zwischen den Mikrocontroller (200) und das Leistungsversorgungsmodul (100) geschaltet ist, wobei die Energiespeicherschaltung (400) dazu verwendet wird, dem Mikrocontroller (200) elektrische Energie zuzuführen und den Abfall der Versorgungsspannung des Mikrocontrollers in einem bestimmten Zeitraum zu verzögern, wenn in der Last ein Überstrom oder ein Kurzschluss auftritt;
und wobei der Mikrocontroller (200) dazu verwendet wird, das Überstrom- oder Kurzschlusssignal in dem bestimmten Zeitraum zu verarbeiten und ein Steuersignal auszugeben, um den Feldeffekttransistor (300) auszuschalten;
**dadurch gekennzeichnet, dass** die Energiespeicherschaltung (400) eine Diode (D) und einen Energiespeicherkondensator (C) aufweist, die positive Elektrode der Diode (D) mit der positiven Elektrode des Leistungsversorgungsmoduls (100) verbunden ist, die negative Elektrode der Diode (D) mit dem positiven Versorgungsanschluss des Mikrocontrollers (200) und einem ersten Anschluss des Speicherkondensators verbunden ist, ein zweiter Anschluss des Energiespeicherkondensators (C) mit der negativen Elektrode des Leistungsversorgungsmoduls (100) und dem negativen Versorgungsanschluss des Mikrocontrollers (200) verbunden ist; und
wenn eine Ausgangsspannung des Leistungsmoduls aufgrund des Überstroms oder des Kurzschlusses abfällt, der Energiespeicherkondensator (C) der Energiespeicherschaltung (400) dem Mikrocontroller (200) elektrische Energie zuführt und ein Entladungspfad von dem Energiespeicherkondensator (C), der über das Leistungsmodul folgt, von der Diode (D) abgeschnitten wird.

2. Schutzvorrichtung zum Verhindern, dass die Versorgungsspannung des Mikrocontrollers (200) abfällt, nach Anspruch 1, **dadurch gekennzeichnet, dass** ein Signalausgangsanschluss des Mikrocontrollers (200) mit dem Gate des Feldeffekttransistors (300) verbunden ist, die Source des Feldeffekttransistors (300) mit der negativen Elektrode des Leistungsmoduls verbunden ist, der Drain des Feldeffekttransistors (300) mit der Last verbunden ist.

3. Schutzvorrichtung zum Verhindern, dass die Versorgungsspannung des Mikrocontrollers (200) abfällt, nach Anspruch 1, **dadurch gekennzeichnet, dass** ein Signalausgangsanschluss des Mikrocontrollers (200) mit dem Gate des Feldeffekttransistors (300) verbunden ist, die Source des Feldeffekttransistors (300) mit der Last verbunden ist, der Drain des Feldeffekttransistors (300) mit der positiven Elektrode des Leistungsversorgungsmoduls (100) und der positiven Elektrode der Diode (D) verbunden ist.

4. Schutzvorrichtung zum Verhindern, dass die Versorgungsspannung des Mikrocontrollers (200) abfällt, nach einem der Ansprüche 1 bis 3, **dadurch gekennzeichnet, dass** der Mikrocontroller (200) als Einchip-Mikrocomputer oder Zentraleinheit konfiguriert ist.

5. Verfahren zum Verhindern, dass eine Versorgungsspannung eines Mikrocontrollers (200) in einer elektronischen Zigarette abfällt, **dadurch gekennzeichnet, dass** das Verfahren umfasst:
Ermitteln eines Betriebsstroms einer Lastschaltung in Echtzeit und Versehen des Mikrocontrollers (200) mit einem Detektionssignal, wenn ein Überstrom oder ein Kurzschluss ermittelt wird, gleichzeitig mit dem Abfallen einer Ausgangsversorgungsspannung einer Batterie;
Verzögern des Abfallens der Versorgungsspannung des Mikrocontrollers (200) durch eine Energiespeicherschaltung (400), die zwischen den Mikrocontroller (200) und ein Leistungsmodul geschaltet ist, wenn ein Überstrom oder ein Kurzschluss auftritt, und Aufrechterhalten der Versorgungsspannung des Mikrocontrollers (200), so dass sie nicht geringer ist, als seine minimale Betriebsspannung in einem bestimmten Zeitraum; und
Verarbeiten des Überstrom- oder Kurzschlusssignals in dem bestimmten Zeitraum durch den Mikrocontroller (200) und Ausgeben eines Steuersignals, um einen Feldeffekttransistor (300) auszuschalten, um den Stromfluss in der Lastschaltung zu unterbrechen, wobei die Source des Feldeffekttransistors mit der negativen Elektrode der Batterie verbunden ist und der Drain des Feldeffekttransistors mit der Lastschaltung verbunden ist;
die Energiespeicherschaltung (400) eine Diode (D) und einen Energiespeicherkondensator (C) aufweist, die positive Elektrode der Diode (D) mit dem Leistungsversorgungsmodul (100) verbunden ist, die negative Elektrode der Diode (D) mit einem ersten Anschluss des Speicherkondensators und dem Mikrocontroller (200) verbunden ist, ein zweiter Anschluss des Speicherkondensators mit dem negativen Versorgungsanschluss des Mikrocontrollers (200) und der negativen Elektrode des Leistungsversorgungsmoduls (100) verbunden ist; und
der bestimmte Zeitraum eine Entladungszeit des Energiespeicherkondensators (C) ist.

6. Verfahren zum Verhindern, dass die Versorgungsspannung des Mikrocontrollers (200) abfällt, nach Anspruch 5, **dadurch gekennzeichnet, dass** die Entladungszeit die Zeit ist, in der die Spannung der Energiekondensatorspannung von der normalen Betriebsspannung des Mikrocontrollers (200) auf die minimale Betriebsspannung des Mikrocontrollers (200) fällt durch Entladen, um den Mikrocontroller (200) mit elektrischer Energie zu versorgen.

## Revendications

1. Dispositif de protection servant à empêcher une chute de tension d'alimentation d'un microcontrôleur (200) dans une cigarette électronique, comprenant :
un microcontrôleur (200) ;
un module d'alimentation électrique (100) utilisé pour émettre une tension d'alimentation vers le microcontrôleur (200) et une charge ;
un transistor à effet de champ (330), la source du transistor à effet de champ étant connectée à l'électrode négative du module d'alimentation électrique, et le drain du transistor à effet de champ étant connecté à la charge ;
un module de détection de court-circuit ou de sur-courant, utilisé pour détecter en temps réel un courant de fonctionnement d'un circuit de charge, et pour fournir un signal de détection au microcontrôleur (200) ; et
un circuit de stockage d'énergie (400) connecté entre le microcontrôleur (200) et le module d'alimentation électrique (100), et le circuit de stockage d'énergie (400) est utilisé pour fournir de l'énergie électrique au microcontrôleur (200) et pour retarder la chute de tension d'alimentation du microcontrôleur (200) pendant un certain laps de temps lorsqu'un sur-courant ou un court-circuit se produit dans la charge ; et le microcontrôleur (200) est utilisé pour traiter le signal de sur-courant ou de court-circuit pendant le certain laps de temps et émettre un signal de commande pour éteindre le transistor à effet de champ (300) ;
**caractérisé en ce que** le circuit de stockage d'énergie (400) comprend une diode (D) et un condensateur de stockage d'énergie (C), l'électrode positive de la diode (D) est connectée à l'électrode positive du module d'alimentation électrique (100), l'électrode négative de la diode (D) est connectée à la borne d'alimentation positive du microcontrôleur (200) et à une première borne du condensateur de stockage, une seconde borne du condensateur de stockage d'énergie (C) est connectée à l'électrode négative du module d'alimentation électrique (100) et à la borne d'alimentation négative du microcontrôleur (200) ; et
lorsqu'une tension de sortie du module électrique chute à cause du sur-courant ou du court-circuit, le condensateur de stockage d'énergie (C) du circuit de stockage d'énergie (400) fournit de l'énergie électrique au microcontrôleur (200), et un trajet de déchargement à partir du condensateur de stockage d'énergie (C) suivant via le module électrique est coupé par la diode (D).

2. Dispositif de protection servant à empêcher la chute de tension d'alimentation du microcontrôleur (200) selon la revendication 1, **caractérisé en ce qu'**une borne de sortie de signal du microcontrôleur (200) est connectée à la grille du transistor à effet de champ (300), la source du transistor à effet de champ (300) est connectée à l'électrode négative du module électrique, le drain du transistor à effet de champ (300) est connecté à la charge.

3. Dispositif de protection servant à empêcher la chute de tension d'alimentation du microcontrôleur (200) selon la revendication 1, **caractérisé en ce qu'**une borne de sortie de signal du microcontrôleur (200) est connectée à la grille du transistor à effet de champ (300), la source du transistor à effet de champ (300) est connectée à la charge, le drain du transistor à effet de champ (300) est connecté à l'électrode positive du module d'alimentation électrique (100) et à l'électrode positive de la diode (D).

4. Dispositif de protection servant à empêcher la chute de tension d'alimentation du microcontrôleur (200) selon l'une quelconque des revendications 1 à 3, **caractérisé en ce que** le microcontrôleur (200) est conçu sous la forme d'un micro-ordinateur à puce unique ou CPU.

5. Procédé servant à empêcher une chute de tension d'alimentation d'un microcontrôleur (200) dans une cigarette à électrode, **caractérisé en ce que** le procédé comprend :
une détection en temps réel d'un courant de fonctionnement d'un circuit de charge, et la fourniture d'un signal de détection au microcontrôleur (200), lorsqu'un sur-courant ou un court-circuit est détecté, en même temps qu'une baisse d'une tension d'alimentation de sortie d'une batterie ;
un circuit de stockage d'énergie (400) connecté entre le microcontrôleur (200) et un module électrique, retardant la chute de tension d'alimentation du microcontrôleur (200) lorsqu'un sur-courant ou un court-circuit se produit, et conservant la tension d'alimentation du microcontrôleur (200) qui n'est pas inférieure à sa tension de fonctionnement minimale pendant un certain laps de temps ; et
le microcontrôleur (200) traite le signal de sur-courant ou de court-circuit pendant le certain laps de temps et émet un signal de commande pour éteindre un transistor à effet de champ (300) afin de couper un flux de courant dans le circuit de charge, la source du transistor à effet de champ étant connectée à l'électrode négative de la batterie, et le drain du transistor à effet de champ est connecté au circuit de charge ;
le circuit de stockage d'énergie (400) comprend une diode (D) et un condensateur de stockage d'énergie (C), l'électrode positive de la diode (D) est connectée au module d'alimentation électrique (100), l'électrode négative de la diode (D) est connectée à une première borne du condensateur de stockage et au microcontrôleur (200), une seconde borne du condensateur de stockage est connectée à la borne d'alimentation négative du microcontrôleur (200) et à l'électrode négative du module d'alimentation électrique (100) ; et
le certain laps de temps est un temps de déchargement du condensateur de stockage d'énergie (C).

6. Procédé servant à empêcher la chute de tension d'alimentation du microcontrôleur (200) selon la revendication 5, **caractérisé en ce que** le temps de déchargement est le temps au cours duquel la tension de la tension du condensateur d'énergie chute d'une tension de fonctionnement normale du microcontrôleur (200) à une tension de fonctionnement minimale du microcontrôleur (200) par déchargement en vue de fournir de l'énergie électrique au microcontrôleur (200).
